# EUROPÄISCHE PATENTSCHRIFT

(11) **EP 4 376 684 B1**
(45) Veröffentlichungstag und Bekanntmachung des Hinweises auf die Patenterteilung: **28.01.2026**
(21) Anmeldenummer: 23707305.1
(22) Anmeldetag: 20.02.2023
(51) Int. Cl.: A47J 42/16, A47J 42/18, A47J 42/46

(54) **KAFFEEMÜHLE, KAFFEEMASCHINE UND VERFAHREN ZUM MAHLEN VON KAFFEE IN EINER KAFFEEMÜHLE**
COFFEE GRINDER, COFFEE MACHINE AND METHOD FOR GRINDING COFFEE IN A COFFEE GRINDER
MOULIN À CAFÉ, MACHINE À CAFÉ ET PROCÉDÉ DE MOUTURE DE CAFÉ DANS UN MOULIN À CAFÉ

(30) Priorität: 21.10.2022 DE 102022211212
(43) Veröffentlichungstag der Anmeldung: 05.06.2024
(73) Patentinhaber: WMF GmbH, 73312 Geislingen/Steige (DE)
(72) Erfinder: STARTZ, Armin, 89197 Weidenstetten (DE); CASADO, Sebastian, 73111 Lauterstein (DE); YASAR, Ertugrul, 89275 Elchingen (DE)
(74) Vertreter: Pfenning, Meinig & Partner mbB
(86) Internationale Anmeldenummer: PCT/EP2023/054210
(87) Internationale Veröffentlichungsnummer: WO 2024/083353

(56) Entgegenhaltungen:
- EP-A1- 3 669 723
- EP-B1- 2 153 758
- US-A- 5 645 230
- US-B2- 10 405 700
- US-B2- 10 912 417

## Beschreibung

Es wird eine Kaffeemühle, eine Kaffeemaschine, und ein Verfahren zum Mahlen von Kaffee in einer Kaffeemühle bereitgestellt. Die Kaffeemühle zeichnet sich dadurch aus, dass sie ein zweiteiliges Gehäuse hat und damit bei minimalem Bauraum eine maximale Stabilität der Kaffeemühle gewährleistet. Ferner weist die Kaffeemühle einen Gleichstrommotor auf. Dieser Motor ermöglicht, dass die Kaffeemühle gemahlenen Kaffee mit maximaler Lebensdauer und ohne längere Betriebsverzögerung (z.B. durch festgefahrenes Kaffeemehl) auf kleinstmöglichem Bauraum bereitstellen kann. Die Kaffeemühle kann in einer Kaffeemaschine eingesetzt werden. Ferner kann die Kaffeemühle bzw. die Kaffeemaschine in einem Verfahren zum Mahlen von Kaffee verwendet werden, wobei sich für die Kaffeemaschine und das Verfahren die gleichen Vorteile ergeben.

Kaffeemühlen für eine vollautomatische oder halbautomatische Kaffeemaschine bestehen aus einem vielteiligen Gehäuse, einem aufgesetzten Bohnenbehälter und einem Antrieb bestehend aus einem Wechselstrommotor oder einem Gleichstrommotor. Zum Zermahlen der Kaffeebohnen kommen in der Regel Kegelmahlwerke oder Mahlscheiben zur Anwendung. Bei hohen Anforderungen an die Mahlleistung und an den Mahlgrad kommen in der Regel Mahlwerke mit Mahlscheiben zur Anwendung. Die Kaffeebohnen werden hierbei zwischen zwei Mahlscheiben gemahlen, die in dem Gehäuse der Kaffeemühle angeordnet sind. Eine der beiden Mahlscheiben ist feststehend, die andere der beiden Mahlscheiben ist rotierend. Zur Mahlgradverstellung (gröber / feiner) wird der Abstand der beiden Mahlscheiben zueinander verstellt. Als Antrieb werden in der Regel handelsübliche Motoren verwendet, die mit dem Mahlwerk gekoppelt sind.

Kaffeemühlen-Hersteller beziehen die Motoren der von ihnen produzierten Kaffeemühlen oft von Fremdherstellern. Dies hat den Nachteil, dass im Falle einer Änderung der Motoren durch den Fremdhersteller (z.B. von deren Abmessungen) auch das Mühlengehäuse durch den Kaffeemaschinen-Hersteller angepasst werden muss und für die Anpassung ggf. zusätzliche Bauelemente benötigt werden. Für den Kaffeemaschinen-Hersteller bedeutet dies einen hohen Zeitaufwand und Kostenaufwand.

Eine Vielzahl von Kaffeemühlen wird derzeit mit Wechselstrommotoren betrieben. Diese haben zwar den Vorteil, dass sie direkt über die Stromversorgung versorgt werden können ohne hierbei das Netzteil der Kaffeemaschine zu belasten. Die Wechselstrommotoren haben jedoch den Nachteil, dass ihr Anlaufdrehmoment verhältnismäßig gering ist. Um ein Mahlen auch von relativ harten Kaffeebohnen sicherstellen zu können, müssen Wechselstrommotoren deshalb erheblich überdimensioniert werden, d.h. sie sind relativ groß und benötigen sehr viel Bauraum in der Kaffeemühle. Ein weiterer Nachteil von Wechselstrommotoren ist deren schlechter Wirkungsgrad, d.h. sie zeigen im Betrieb einen hohen Grad an Abwärme und Temperaturdehnung.

Ein Vorteil von konventionellen Gleichstrommotoren ist, dass sie nicht wie Wechselstrom-Motoren überdimensioniert werden müssen, da sie bereits beim Anlauf ein hohes Drehmoment entwickeln und mit Überlast betrieben werden können. Der Nachteil ist jedoch, dass das Netzteil der GleichstromMotoren entsprechend groß ausgelegt sein muss, um die benötigten hohen Anlaufströme liefern zu können. Ferner bringt ein Betrieb mit sehr hohen Anlaufströmen unter Überlast den Nachteil mit sich, dass sich die Lebensdauer der Gleichstrommotoren verkürzt. Konventionelle Gleichstrommotoren haben zudem den Nachteil, dass sie keine hohe Drehzahlstabilität und keine Möglichkeit der Überwachung der Drehzahl zeigen. Zudem zeigen konventionelle Gleichstrommotoren regelmäßig einen schlechten Wirkungsgrad, da hohe Motordrehzahlen die Verwendung eines Getriebes erfordert. Ein weiterer Nachteil ist, dass deren Drehzahl abhängig von der Last ist. Beim Einsatz von solchen Motoren in einer Kaffeemühle bedeutet dies, dass die gemahlene Kaffeemehlmenge abhängig vom Füllstand des Bohnenbehälters und auch von der Bohnensorte wird.

Die US 10 405 700 B2 offenbart eine Mühle, die einen Aufnahmebehälter umfasst, der aus einem Aufnahmeraum und einem Installationsraum gebildet ist, wobei im Installationsraum ist eine elektrische Antriebsvorrichtung angeordnet und am unteren Ende des Aufnahmebehälters ist eine hohle Mahlkammer angeordnet ist. Der Innenraum der hohlen Mahlkammer enthält ein Stützelement, das mit einer Drehwelle versehen ist, und eine passive Stange, die mit einer ersten konischen Mahlscheibe verbunden ist. Das obere Ende der passiven Stange ist mit einer Abtriebswelle der Mühle verbunden und das untere Ende der passiven Stange ist mit der Drehwelle der Mühle verbunden, wodurch die konische Mahlscheibe in den Mahlsitz hineinragen kann und zwischen der konischen Mahlscheibe und dem Mahlsitz ein Spalt entsteht.

Die EP 3 669 723 A1 offenbart eine elektrische Kaffeemühle, umfassend einen Behälter zur Aufnahme der zu mahlenden Kaffeebohnen und eine erste Mahlscheibe und eine zweite Mahlscheibe zum Mahlen von Kaffeebohnen, wobei die erste Mahlscheibe am Behälter zur Aufnahme der zu mahlenden Kaffeebohnen befestigt ist und die zweite Mahlscheibe ohne Zwischenschaltung von Untersetzungsgetrieben und/oder Zahnrädern mit der

Abtriebswelle eines elektrischen Motors verbunden ist.

Ausgehend hiervon war es die Aufgabe der vorliegenden Erfindung, eine Kaffeemühle, eine Kaffeemaschine und ein Verfahren zum Mahlen von Kaffee in einer Kaffeemühle bereitzustellen, welche(s) die zumindest einen der im Stand der Technik bekannten Nachteile nicht mehr aufweist. Insbesondere sollte die Kaffeemühle, die Kaffeemaschine und das Verfahren erlauben, gemahlenen Kaffee mit maximaler Lebensdauer und ohne längere Betriebsverzögerung (z.B. durch festgefahrenes Kaffeemehl) auf kleinstmöglichem Bauraum bereitzustellen. Bevorzugt sollte es die Kaffeemühle, die Kaffeemaschine und das Verfahren ferner erlauben, gemahlenen Kaffee zudem mit hoher Qualität, minimaler Strombelastung, minimaler Geräuschbelästigung und/oder konstanter Dosierleistung bereitzustellen.

Die Aufgabe wird gelöst durch die Kaffeemühle mit den Merkmalen von Anspruch 1, der Kaffeemaschine mit den Merkmalen von Anspruch 12 und dem Verfahren mit den Merkmalen von Anspruch 14. Die abhängigen Ansprüche zeigen vorteilhafte Weiterbildungen auf.

Erfindungsgemäß wird eine Kaffeemühle mit einem zweiteiligen Gehäuse bereitgestellt, enthaltend
a) ein Gehäuse-Oberteil mit einem Innenraum, der zur Aufnahme von Kaffeebohnen geeignet ist;
b) ein Gehäuse-Unterteil, das mit dem Gehäuse-Oberteil verbunden ist und einen Innenraum aufweist, der zur Aufnahme eines Gleichstrommotors (bevorzugt eines bürstenlosen Gleichstrommotors) geeignet ist;
c) eine Mahlscheibenanordnung, die eine erste, obere, nicht-rotierbare Mahlscheibe und eine zweite, untere, rotierbare Mahlscheibe enthält oder daraus besteht, wobei die erste Mahlscheibe gegenüber der zweiten Mahlscheibe angeordnet ist und die Kaffeemühle dazu geeignet ist, eine Entfernung der ersten Mahlscheibe zur zweiten Mahlscheibe zu verändern; und
d) ein Gleichstrommotor (bevorzugt ein bürstenloser Gleichstrommotor), der einen Stator, einen Rotor und eine Motorwelle aufweist, wobei die Motorwelle mit dem Rotor und mit der zweiten Mahlscheibe verbunden ist, wobei der Stator und Rotor innerhalb des Innenraums des Gehäuse-Unterteils angeordnet sind und die Motorwelle innerhalb des Gehäuse-Unterteils und zumindest bereichsweise innerhalb des Gehäuse-Oberteils angeordnet ist;

wobei die Kaffeemühle dazu geeignet ist, die zweite Mahlscheibe durch eine Bewegung des Rotors des Gleichstrommotors relativ zur ersten Mahlscheibe zu rotieren,
dadurch gekennzeichnet, dass der Gleichstrommotor ein gehäuseloser Gleichstrommotor ist.

Die erfindungsgemäße Kaffeemühle eignet sich dazu, gemahlenen Kaffee mit maximaler Lebensdauer und ohne längere Betriebsverzögerung (z.B. durch festgefahrenes Kaffeemehl) auf kleinstmöglichem Bauraum bereitzustellen.

Grund hierfür ist, dass das Mühlengehäuse nur zweiteilig ist und somit weniger Bauteile und Verbindungselemente benötigt und damit eine kleinere Bauweise und eine höhere Langzeitstabilität ermöglicht. Durch die Anordnung des Gleichstrommotors in dem Gehäuse der Kaffeemühle (speziell: im Gehäuse-Unterteil) wird der benötigte Bauraum zusätzlich reduziert. Ferner ist die Drehzahl von Gleichstrommotoren steuerbar und im Falle einer Ausstattung der Gleichstrommotoren mit einem Drehwinkelsensor sogar regelbar. Unter anderem ist mit Gleichstrommotoren auch ein Rechtsdrehen und Linksdrehen möglich, was es ermöglicht, beim Betrieb durch Kaffeereste festgefahrene Mahlscheiben schnell wieder zu lösen und den Betrieb fortzusetzen, was längere Betriebsverzögerungen durch festgefahrenes Kaffeemehl vermeidet und die Lebensdauer der Kaffeemühle verlängern kann.

Für den Fall, dass als Gleichstrommotor ein bürstenloser Gleichstrommotor eingesetzt wird, eignet sich die Kaffeemühle ferner dazu, gemahlenen Kaffee zudem mit hoher Qualität, minimaler Strombelastung, minimaler Geräuschbelästigung, noch längerer Lebensdauer, konstanter Dosierleistung und auf noch kleinerem Bauraum bereitzustellen. Dieser Motor besitzt nicht wie konventionelle Gleichstrommotoren Kohlen, sondern wird elektronisch kommutiert, und zeigt damit eine geringere Anfälligkeit für Verschleiß und einen geräuschärmeren Betrieb. Ferner weisen bürstenlosen Gleichstrommotoren eine deutlich höhere Energieeffizienz auf als konventionelle Gleichstrommotoren und benötigen, bei gleicher Leistung wie konventionelle Gleichstrommotoren oder Wechselstrommotoren, weniger Bauraum (aufgrund des Fehlens der Kohlen). Bürstenlose Gleichstrommotoren zeigen zudem weniger Erwärmung als konventionelle Gleichstrommotoren, was eine hohe Qualität des gemahlenen Kaffees sicherstellen kann. Darüber hinaus weisen bürstenlose Gleichstrommotoren von Haus aus einen Drehwinkensensor auf, der zur Regelung ihrer Drehzahl verwendet werden kann. Dadurch kann beispielsweise ein möglicher Einbruch der Drehzahl unter hoher Last schnell nachgeregelt werden (d.h. über Steigerung der Motorleistung kompensiert werden), sodass eine konstante Dosierleistung sichergestellt werden kann.

Das Gehäuse-Oberteil der Kaffeemühle kann durch eine reversible Verbindung mit dem Gehäuse-Unterteil verbunden sein. Die reversible Verbindung ist bevorzugt ausgewählt aus der Gruppe bestehend aus Kraftschluss-Verbindung, Formschluss-Verbindung und Kombinationen hiervon. Besonders bevorzugt ist die reversible Verbindung ausgewählt aus der Gruppe bestehend aus Klemmverbindung, Schraubverbindung, Klammerverbindung, Schnapphakenverbindung, Verbindung über eine geriffelte Fläche und Kombinationen hiervon. Insbesondere ist die reversible Verbindung eine Schraub-Klemm-Verbindung über einen Klemmring ist. Der Vorteil dieser Verbindung über einen Klemmring ist, dass sich das Gehäuse-Oberteil relativ zum Gehäuse-Unterteil um 360° drehen lässt. Damit kann auch bei der fertig assemblierten Kaffeemühle noch ein Auslass der Kaffeemühle für den gemahlenen Kaffee (z.B. eine durchgehende Öffnung im Gehäuse-Oberteil der Kaffeemühle) auf flexible Art und Weise in eine gewünschte Richtung gedreht werden. Dies kann beispielsweise ein Vorteil sein, wenn eine Kaffeemaschine zwei erfindungsgemäße Kaffeemühlen aufweist und der Auslass für gemahlenen Kaffee für beide Mühlen auf einen Einlass einer Brühgruppe der Kaffeemaschine justiert werden müssen. Diese Justierung kann somit schneller und einfacher erfolgen.

Die Kaffeemühle kann eine durchgehende Öffnung von einem Innenraum der Kaffeemühle in einen Außenraum der Kaffeemühle aufweisen und dazu geeignet sein, gemahlenen Kaffee durch die durchgehende Öffnung zu befördern (d.h. die Kaffeemühle kann einen Auslass für gemahlenen Kaffee aufweisen). Die durchgehende Öffnung ist bevorzugt in dem Gehäuse-Oberteil angeordnet. Ferner ist die durchgehende Öffnung bevorzugt mit einem Leitungsrohr verbunden, wobei das Leitungsrohr optional mit dem Gehäuse-Oberteil durch eine Verbindung verbunden ist, die ausgewählt ist aus der Gruppe bestehend aus Steckverbindung, Schraubverbindung und Kombinationen hiervon. Das Leitungsrohr kann es vereinfachen, den Auslass von gemahlenem Kaffee in einen Einlass einer Brühgruppe einer Kaffeemaschine oder in einen Siebträger für eine Kaffeemaschine zu justieren bzw. zu richten.

Die Kaffeemühle kann im Gehäuse-Unterteil ein Lagerelement zur Lagerung der Motorwelle aufweisen.

Das Lagerelement weist bevorzugt ein Außengewinde auf, über das es mit dem Gehäuse-Unterteil verschraubt ist, wobei das Außengewinde besonders bevorzugt eine Ganghöhe im Bereich von 0,2 mm bis 1,0 mm, besonders bevorzugt 0,3 mm bis 0,8 mm, ganz besonders bevorzugt 0,4 mm bis 0,6 mm, insbesondere 0,5 mm, aufweisen. Eine Ganghöhe in diesem Bereich hat sich als vorteilhaft für eine feine Einstellung des Abstands zwischen der zweiten und ersten Mahlscheibe herausgestellt, d.h. ist vorteilhaft für eine feine Einstellung des Mahlgrads.

In einer vorteilhaften Ausgestaltungsform ist das Lagerelement mit einem Verstellmotor verbunden, bevorzugt über ein Zahnrad, das in ein Ritzel des Verstellmotors eingreift. Der Verstellmotor ist insbesondere dazu geeignet, eine Position des Lagerelements und der darin gelagerten Motorwelle in Richtung der Längsachse der Motorwelle zu verändern. Der Verstellmotor kann optional von der Kaffeemühle umfasst sein oder von einer Kaffeemaschine umfasst sein, welche die erfindungsgemäße Kaffeemühle aufweist. Prinzipiell ist alternativ zu dieser bevorzugten Ausgestaltungsform denkbar, dass eine Position des Lagerelements und der darin gelagerten Motorwelle in Richtung der Längsachse der Motorwelle ohne Hilfe eines durch einen Benutzer verändert wird, beispielsweise durch ein manuelles Drehen des Lagerelements durch einen Benutzer.

Die Motorwelle des Gleichstrommotors ist bevorzugt dazu geeignet, eine Position in Richtung der Längsachse der Motorwelle zu verändern. Da die Motorwelle mit der zweiten Mahlscheibe verbunden ist, bewirkt die Eignung zur Positionsänderung in Richtung der Längsachse der Motorwelle den Vorteil, dass ein Abstand zwischen der zweiten Mahlscheibe zur ersten Mahlscheibe (und damit ein Mahlgrad der Kaffeebohnen) über eine axiale Bewegung der Motorwelle eingestellt werden kann. Um dies zu ermöglichen, ist die Motorwelle bevorzugt mit einem Lagerelement zur Lagerung der Motorwelle verbunden, bevorzugt in einem Bereich der Motorwelle, der im Gehäuse-Unterteil angeordnet ist, wobei ein Verstellmotor der Kaffeemühle oder ein Verstellmotor einer Kaffeemaschine, welche die Kaffeemühle aufweist, dazu geeignet ist, über eine Rotation seines Rotors eine Veränderung der Position des Lagerelements und der darin gelagerten Motorwelle in Richtung der Längsachse der Motorwelle zu bewirken.

Ferner kann die Motorwelle mit dem Rotor des Gleichstrommotors in einem Bereich der Motorwelle verbunden sein, der im Gehäuse-Unterteil angeordnet ist, wobei der Gleichstrommotor dazu geeignet ist, über eine Rotation seines Rotors eine Drehbewegung der Motorwelle um die Längsachse der Motorwelle zu bewirken.

Abgesehen davon kann die Motorwelle über einen Mahlscheibenträger mit der zweiten (d.h. der unteren, rotierbaren) Mahlscheibe verbunden sein, besonders bevorzugt in einem Bereich der Motorwelle, der innerhalb des Gehäuse-Oberteils angeordnet ist. Die Verbindung der Motorwelle über einen Mahlscheibenträger mit der zweiten Mahlscheibe hat den Vorteil, dass auf einfachere und kostengünstigere Art und Weise eine kraftübertragende Verbindung zwischen Motorwelle und der zweiten Mahlscheibe etabliert werden kann. Beispielsweise muss bei einem Austausch der zweiten Mahlscheibe keine Anpassung der Mahlscheibe an die Motorwellengeometrie stattfinden. Die relativ direkte Verbindung der zweiten Mahlscheibe mit der Motorwelle über den Mahlscheibenträger verbessert zudem den Rundlauf und Planlauf der zweiten Mahlscheibe im Vergleich zu Kaffeemühlen mit mehreren Adaptern und Mitnehmern. Die Verbesserung des Rundlaufs und Planlaufs kann einen möglichst konstanten Mahlgrad während des Betriebs der Kaffeemühle sicherstellen.

Die erste Mahlscheibe und/oder die zweite Mahlscheibe kann/können ein Material enthalten oder daraus bestehen, das ausgewählt ist aus der Gruppe bestehend aus Metall, Keramik und Kombinationen hiervon, bevorzugt ein Material ausgewählt aus der Gruppe bestehend aus Stahl, Keramik und Kombinationen hiervon, insbesondere ein Material ausgewählt aus der Gruppe bestehend aus X210CrW12-Stahl und Al₂O₃-Keramik.

Ferner kann/können die erste Mahlscheibe und/oder zweite Mahlscheibe einen Außendurchmesser im Bereich von 30 bis 80 cm, bevorzugt 55 bis 70 cm, insbesondere 65 cm, aufweisen.

Darüber hinaus kann/können die erste Mahlscheibe und/oder zweite Mahlscheibe im Gehäuse-Oberteil angeordnet sein.

Die Kaffeemühle kann ein Einzugselement (für Kaffee) aufweisen, das in dem Gehäuse-Oberteil angeordnet ist. Das Einzugselement kann eine Spindel mit einer Spindelachse aufweisen. Bevorzugt ist das Einzugselement dazu geeignet, (um seine Spindelachse) zu rotieren und dabei Kaffeebohnen zur Mahlscheibenanordnung zu transportieren. Der Vorteil hierbei ist ein gleichmäßiger Einzug von Kaffeebohnen in die Mahlscheibenanordnung, wodurch ein gleichmäßigeres Mahlergebnis (z.B. bezüglich der Mahlmenge und/oder des Mahlgrads) sichergestellt werden kann. Das Einzugselement kann einen Eingreifschutz aufweisen, der dazu geeignet ist, ein Hineingreifen in den Innenraum des Gehäuse-Oberteils zu verhindern. Dadurch können mögliche Verletzungen eines Benutzers der Kaffeemühle vermieden werden. Das Einzugselement ist bevorzugt mit der zweiten, unteren, rotierbaren Mahlscheibe verbunden. Dadurch kann eine Rotation des Einzugselements durch eine Rotation der zweiten Mahlscheibe bewirkt werden, d.h. das Einzugselement kann mit der zweiten Mahlscheibe mitrotieren. Besonders bevorzugt ist das Einzugselement mit der Motorwelle (und der zweiten, unteren, rotierbaren Mahlscheibe) verschraubt.

Die zweite, untere, rotierbare Mahlscheibe kann einstückig mit einem Mahlscheibenträger sein. In diesem Fall würde mit einem Austausch der zweiten Mahlscheibe auch ein Austausch des Mahlscheibenträgers erfolgen.

In einer vorteilhaften Ausgestaltungsform ist die zweite untere, rotierbare Mahlscheibe mit einem Mahlscheibenträger verbunden, bevorzugt über eine Verbindung ausgewählt aus der Gruppe bestehend aus Kraftschluss-Verbindung, Formschluss-Verbindung und Kombinationen hiervon, wobei die Verbindung insbesondere eine Schraubverbindung ist. Der Vorteil dieser Ausgestaltungsform ist, dass bei einem Austausch der zweiten Mahlscheibe der Mahlscheibenträger nicht ausgetauscht werden muss, was Material und Kosten einspart und damit ökonomischer und ökologischer ist.

Der Gleichstrommotor kann ein bürstenbehafteter Gleichstrommotor oder ein bürstenloser Gleichstrommotor sein. Der Vorteil eines bürstenlosen Gleichstrommotors ist, dass er bereits einen Drehwinkelsensor aufweist. Dieser kann zur Regelung seiner Drehzahl verwendet werden, um eine konstante Dosierleistung der Kaffeemühle sicherzustellen. Aufgrund der Abwesenheit von Kohlen zur Bestromung erzeugt ein bürstenloser Gleichstrommotor beim Betrieb zudem weniger Wärme als ein konventioneller Gleichstrommotor, wodurch eine höhere Qualität des gemahlenen Kaffees sichergestellt werden kann. Aufgrund der Abwesenheit von Kohlen beim bürstenlosen Gleichstrommotor ist ferner die Strombelastung geringer und die Lebensdauer länger (da keine Reibungsverluste durch die Kohlen auftreten). Zudem erlaubt der bürstenlose Gleichstrommotor einen leiseren Betrieb (da keine Geräuschentwicklung durch reibende Kohlen auftritt) und eine kompaktere Ausgestaltung der Kaffeemühle (da keine Kohlen Bauraum beanspruchen).

Erfindungsgemäß ist der Gleichstrommotor ein gehäuseloser Gleichstrommotor, optional ein gehäuseloser, bürstenbehafteter Gleichstrommotor oder ein gehäuseloser, bürstenloser Gleichstrommotor. Ein Vorteil des gehäuselosen Gleichstrommotors ist, dass ein Hersteller von Kaffeemühlen, der den gehäuselosen (optional auch bürstenlosen) Gleichstrommotor von einem Fremdhersteller bezieht, nicht mehr auf die vom Fremdanbieter vorgegebene und Änderungen unterworfene Form des Motorgehäuses angewiesen ist, was die Flexibilität des Kaffeemühlen-Herstellers erhöht und seine Herstellungskosten senkt. Darüber hinaus benötigt ein gehäuseloser (optional auch bürstenloser) Gleichstrommotor weniger Bauraum als ein (optional bürstenloser) Gleichstrommotor mit Gehäuse, was den Bauraum für die Kaffeemühle weiter reduzieren kann. Dies liegt daran, dass in dieser Ausführungsform das Gehäuse-Unterteil (und zumindest bereichsweise das Gehäuse-Oberteil) der erfindungsgemäßen Kaffeemühle das (einzige) Gehäuse des gehäuselosen Gleichstrommotors darstellen kann.

Der Gleichstrommotor kann eine Leistungsaufnahme im Bereich von 50 bis 500 Watt aufweisen. Eine Leistungsaufnahme in diesem Bereich hat sich als vorteilhaft für das Mahlen von Kaffee erwiesen.

In einer bevorzugten Ausgestaltungsform weist der Gleichstrommotor eine Höhe im Bereich von 25 bis 70 mm, besonders bevorzugt 35 bis 45 mm, insbesondere 40 mm, auf und/oder einen Durchmesser im Bereich von 50 bis 120 mm auf. Diese Abmessungen erlauben die Bereitstellung einer sehr kompakten Kaffeemühle.

Die Kaffeemühle, bevorzugt der Gleichstrommotor der Kaffeemühle, kann eine Steuereinheit aufweisen. Die Steuereinheit ist bevorzugt konfiguriert, eine Drehzahl des Gleichstrommotors zu steuern oder zu regeln. Ferner kann die Steuereinheit konfiguriert sein, eine Drehrichtung des Rotors des Gleichstrommotors zu steuern oder zu regeln. Für die Regelung muss der Gleichstrommotor einen Drehwinkelsensor aufweisen.

In einer bevorzugten Ausgestaltungsform weist der Gleichstrommotor damit einen Drehwinkelsensor auf, wobei der Drehwinkelsensor bevorzugt ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor und/oder GMR-Sensor enthält oder daraus besteht. Der Drehwinkelsensor hat den Vorteil, dass die Drehzahl des Gleichstrommotors geregelt werden kann, wodurch ein möglicher Einbruch der Drehzahl aufgrund einer hohen Last schnell ausgeglichen werden kann und somit sichergestellt werden kann, dass die Kaffeemühle eine konstante Dosierleistung aufweist.

Bevorzugt ist eine Steuereinheit der Kaffeemühle, bevorzugt eine Steuereinheit des Gleichstrommotors der Kaffeemühle, konfiguriert, basierend auf mindestens einem Signal des Drehwinkelsensors eine Drehzahl des Gleichstrommotors zu regeln.

Ferner ist bevorzugt, dass eine Steuereinheit der Kaffeemühle, bevorzugt eine Steuereinheit des Gleichstrommotors der Kaffeemühle, konfiguriert ist, basierend auf mindestens einem Signal des Drehwinkelsensors eine Drehrichtung des Rotors des Gleichstrommotors zu steuern oder zu regeln. Durch die Regelung der Drehrichtung ist es möglich, ein mögliches Festfahren der ersten und zweiten Mahlscheibe durch Kaffeebohnen bzw. Kaffeemehl (d.h. eine mögliche Blockade des Mahlwerks) zu lösen, sodass der Betrieb der Kaffeemühle fortgeführt werden kann.

Es ist daher bevorzugt, dass eine Steuereinheit der Kaffeemühle, bevorzugt eine Steuereinheit des Gleichstrommotors der Kaffeemühle, konfiguriert ist, basierend auf mindestens einem Signal des Drehwinkelsensors eine Blockade des Gleichstrommotors zu detektieren und im Falle einer detektierten Blockade eine Drehrichtung des Gleichstrommotors für einen bestimmten Zeitraum, insbesondere 1 bis 5 Sekunden, und/oder für einen bestimmten Grad an Umdrehungen, insbesondere 0,25 bis 10 Umdrehungen, umzukehren.

In einer weiteren bevorzugten Ausgestaltungsform ist eine Steuereinheit der Kaffeemühle, bevorzugt eine Steuereinheit des Gleichstrommotors der Kaffeemühle, konfiguriert, basierend auf mindestens einem Signal des Drehwinkelsensors einen Schleifpunkt der ersten Mahlscheibe auf der zweiten Mahlscheibe zu detektieren und im Falle eines detektierten Schleifpunkts diesen als eine Einstellung für den feinsten Mahlgrad der Kaffeemühle festzulegen. Zur Detektion des Schleifpunkts wird bevorzugt neben dem mindestens einen Signal des Drehwinkelsensors auch eine Stromaufnahme des Gleichstrommotors berücksichtigt, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird.

Das Gehäuse-Oberteil und/oder das Gehäuse-Unterteil der Kaffeemühle kann/können zumindest bereichsweise eine Wandstärke im Bereich von 1 bis 5 mm aufweisen.

Ferner kann/können das Gehäuse-Oberteil und/oder das Gehäuse-Unterteil der Kaffeemühle ein Material enthalten oder daraus bestehen, das ausgewählt ist aus der Gruppe bestehend aus Metall, Kunststoff und Kombinationen hiervon, bevorzugt ein Material ausgewählt aus der Gruppe bestehend aus Aludruckguss, Zinkdruckguss, Stahl, Kunststoff und Kombinationen hiervon.

Darüber hinaus kann/können das Gehäuse-Oberteil und/oder das Gehäuse-Unterteil der Kaffeemühle eine Höhe im Bereich von 50 bis 150 mm aufweisen.

Abgesehen davon kann/können das Gehäuse-Oberteil und/oder das Gehäuse-Unterteil der Kaffeemühle einen Durchmesser im Bereich von 50 bis 150 mm aufweisen.

Zudem kann/können das Gehäuse-Oberteil und/oder das Gehäuse-Unterteil der Kaffeemühle zumindest bereichsweise eine Form eines Hohlzylinders aufweisen.

Am Boden des Gehäuse-Unterteils der Kaffeemühle kann ein Sensorelement Erfassung des Mahlgrads angeordnet sein. Dieses Sensorelement ist dazu geeignet, eine Entfernung des Sensorelements zu einem Lagerelement zur Lagerung der Motorwelle des Gleichstrommotors zu detektieren. Eine Steuereinheit der erfindungsgemäßen Kaffeemühle oder einer Kaffeemaschine, welche die erfindungsgemäße Kaffeemühle aufweist, kann konfiguriert sein, aus Informationen des Sensorelements einen Mahlgrad der Kaffeemühle (bzw. des Kaffees) zu ermitteln.

Erfindungsgemäß wird ferner eine Kaffeemaschine bereitgestellt, welche eine erfindungsgemäße Kaffeemühle enthält. Die Kaffeemaschine ist bevorzugt eine halbautomatische Kaffeemaschine oder eine vollautomatische Kaffeemaschine.

Der Gleichstrommotor der Kaffeemühle der Kaffeemaschine kann einen Drehwinkelsensor aufweisen, bevorzugt einen Drehwinkelsensor, der ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor und/oder GMR-Sensor enthält oder daraus besteht.

Eine Steuereinheit der Kaffeemühle und/oder der Kaffeemaschine kann konfiguriert sein, basierend auf mindestens einem Signal des Drehwinkelsensors eine Drehzahl des Gleichstrommotors zu regeln.

Ferner kann eine Steuereinheit der Kaffeemühle und/oder der Kaffeemaschine konfiguriert sein, eine Drehrichtung des Rotors des Gleichstrommotors zu regeln.

Darüber hinaus kann eine Steuereinheit der Kaffeemühle und/oder der Kaffeemaschine konfiguriert sein, eine Blockade des Gleichstrommotors zu detektieren und im Falle einer detektierten Blockade eine Drehrichtung des Gleichstrommotors für einen bestimmten Zeitraum, insbesondere 1 bis 5 Sekunden, und/oder für einen bestimmten Grad an Umdrehungen, insbesondere 0,25 bis 10 Umdrehungen, umzukehren.

Abgesehen davon kann eine Steuereinheit der Kaffeemühle und/oder der Kaffeemaschine konfiguriert sein, einen Schleifpunkt der ersten Mahlscheibe auf der zweiten Mahlscheibe zu detektieren und im Falle eines detektierten Schleifpunkts diesen als eine Einstellung für den feinsten Mahlgrad der Kaffeemühle festzulegen, wobei zur Detektion des Schleifpunkts neben dem mindestens einen Signal des Drehwinkelsensors optional auch eine Stromaufnahme des Gleichstrommotors berücksichtigt wird, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird.

Erfindungsgemäß wird ferner ein Verfahren zum Mahlen von Kaffee in einer Kaffeemühle bereitgestellt, umfassend die Schritte
a) Bereitstellen einer erfindungsgemäßen Kaffeemühle oder einer erfindungsgemäßen Kaffeemaschine;
b) Befüllen des Gehäuse-Oberteils der Kaffeemühle mit Kaffeebohnen oder grobgemahlenen Kaffee; und
c) Mahlen der Kaffeebohnen oder des grobgemahlenen Kaffees.

In dem Verfahren kann der Gleichstrommotor der Kaffeemühle einen Drehwinkelsensor aufweisen, bevorzugt einen Drehwinkelsensor, der ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor und/oder GMR-Sensor enthält oder daraus besteht.

In dem Verfahren kann, basierend auf mindestens einem Signal des Drehwinkelsensors, eine Drehzahl des Gleichstrommotors geregelt werden.

Ferner kann in dem Verfahren, basierend auf mindestens einem Signal des Drehwinkelsensors, eine Drehrichtung des Rotors des Gleichstrommotors geregelt werden.

Darüber hinaus kann in dem Verfahren, basierend auf mindestens einem Signal des Drehwinkelsensors, eine Blockade des Gleichstrommotors detektiert werden und im Falle einer detektierten Blockade eine Drehrichtung des Gleichstrommotors für einen bestimmten Zeitraum, insbesondere 1 bis 5 Sekunden, und/oder für einen bestimmten Grad an Umdrehungen, insbesondere 0,25 bis 10 Umdrehungen, umgekehrt werden.

Abgesehen davon kann in dem Verfahren, basierend auf mindestens einem Signal des Drehwinkelsensors, ein Schleifpunkt der ersten Mahlscheibe auf der zweiten Mahlscheibe detektiert werden und im Falle eines detektierten Schleifpunkts dieser als eine Einstellung für den feinsten Mahlgrad der Kaffeemühle festgelegt werden, wobei zur Detektion des Schleifpunkts neben dem mindestens einen Signal des Drehwinkelsensors optional auch eine Stromaufnahme des Gleichstrommotors berücksichtigt wird, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird.

Die oben genannten Verfahrensschritte können von einer Steuereinheit des Gleichstrommotors, von einer Steuereinheit der Kaffeemühle oder von einer Steuereinheit der Kaffeemaschine durchgeführt werden.

Anhand der nachfolgenden Figuren soll der erfindungsgemäße Gegenstand näher erläutert werden, ohne diesen auf die hier dargestellten, spezifischen Ausführungsformen einschränken zu wollen.

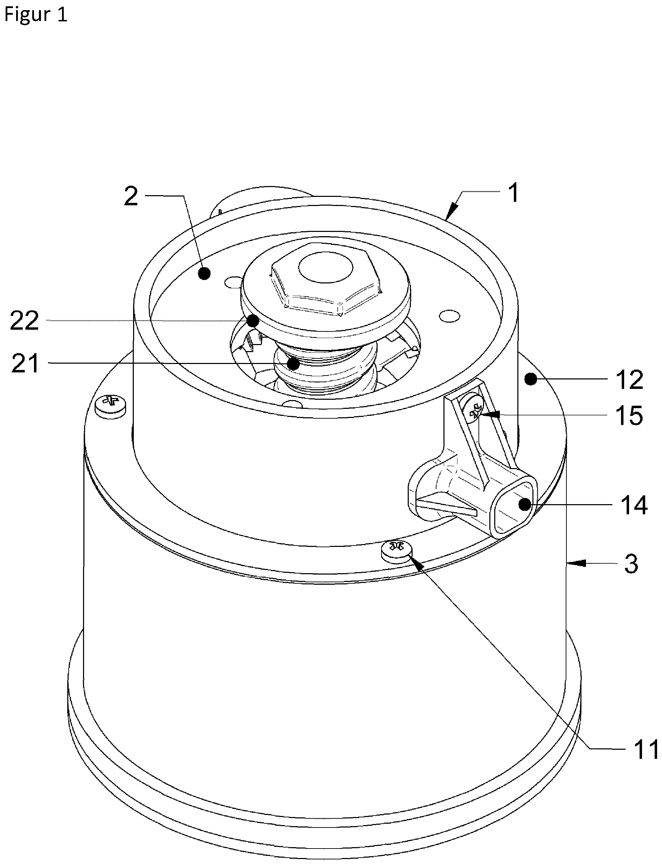

Figur 1 zeigt schematisch ein Innenleben einer spezifischen Ausgestaltungsform einer erfindungsgemäßen Kaffeemühle. Die Kaffeemühle enthält ein Gehäuse-Oberteil 1 mit einem Innenraum 2, der zur Aufnahme von Kaffeebohnen geeignet ist, und ein Gehäuse-Unterteil 3, das mit dem Gehäuse-Oberteil 1 verbunden ist. In dieser Ausgestaltungsform ist erkennbar, dass das Gehäuse-Oberteil 1 mit dem Gehäuse-Unterteil 3 durch eine Schraub-Klemm-Verbindung 11 über einen Klemmring 12 verbunden ist. Der Klemmring 12 ermöglicht eine Drehung des Gehäuse-Oberteils 1 relativ zum Gehäuse-Unterteil 3 um 360°. Ferner ist hier die Anordnung des Einzugselements 21 mit seinem Eingreifschutz 22 dargestellt. Das Einzugselement 21 dient zum Einzug von Kaffee(bohnen) und fixiert die erste Mahlscheibe 5 in dem Gehäuse-Oberteil 1 der Kaffeemühle. Der Eingreifschutz verhindert ein versehentliches Hineingreifen eines Benutzers in den Innenraum 2 des Gehäuse-Oberteils 1 und kann somit mögliche Verletzungen eines Benutzers verhindern. Das Gehäuse-Oberteil 1 weist eine durchgehende Öffnung auf, die mit einem Leitungsrohr 14 verbunden ist. Das Leitungsrohr 14 ist an dem Gehäuse-Oberteil 1 über eine Schraubverbindung 15 befestigt.

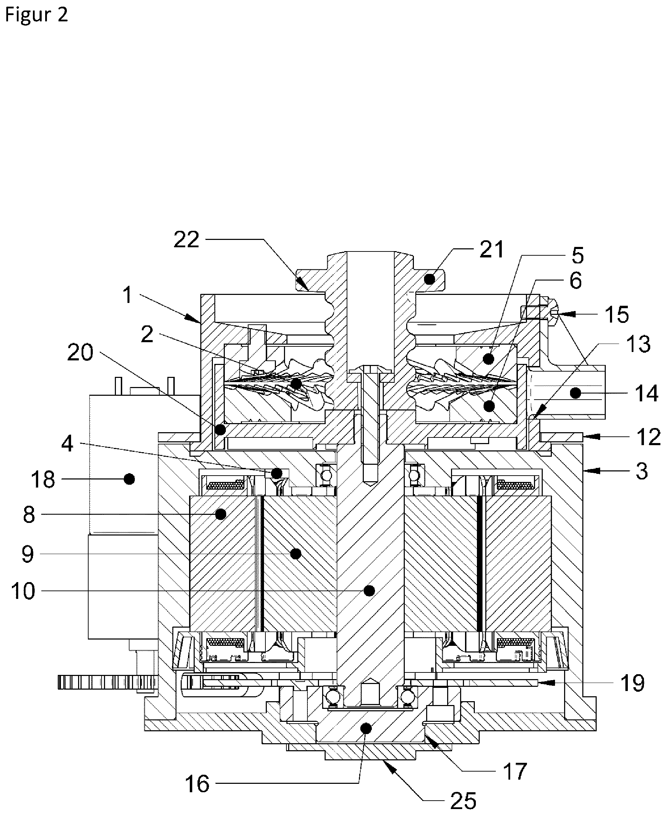

Figur 2 zeigt schematisch einen Querschnitt durch eine spezifische Ausgestaltungsform einer erfindungsgemäßen Kaffeemühle und zeigt neben den in Figur 1 dargestellten Teilen der Kaffeemühle noch weitere Teile der Kaffeemühle. Beispielsweise ist hier der Innenraum 4 des Gehäuse-Unterteils 3 der Kaffeemühle detaillierter dargestellt. Es ist erkennbar, dass die Kaffeemühle eine Mahlscheibenanordnung enthält, die aus einer ersten, oberen, nicht-rotierbaren Mahlscheibe 5 und einer zweiten, unteren, rotierbaren Mahlscheibe 6 besteht, wobei die erste Mahlscheibe 5 gegenüber der zweiten Mahlscheibe 6 angeordnet ist. Die Kaffeemühle ist dazu geeignet, eine Entfernung der ersten Mahlscheibe 5 zur zweiten Mahlscheibe 6 zu verändern. Darüber hinaus enthält die Kaffeemaschine hier einen bürstenlosen Gleichstrommotor, der einen Stator 8 und einen Rotor 9 aufweist, wobei der Rotor 9 mit der zweiten Mahlscheibe 6 verbunden ist. Die Kaffeemühle ist dazu geeignet, die zweite Mahlscheibe 6 durch eine Bewegung eines Rotors 9 des bürstenlosen Gleichstrommotors, die auf die Motorwelle 10 übertragen wird, relativ zur ersten Mahlscheibe 5 zu rotieren. Ferner ist sichtbar, dass die Motorwelle 10 über einen Press-Sitz mit einem Lagerelement 16 zur Lagerung der Motorwelle 10 verbunden ist. Das Lagerelement 16 weist ein Außengewinde 17 auf, über das es mit dem Gehäuse-Unterteil 3 verschraubt ist. Ferner ist das Lagerelement 16 mit einem Zahnrad 19 verbunden, das in ein Ritzel (nicht gezeigt) eines Verstellmotors 18 eingreift. Über den Verstellmotor 18 ist es möglich, das Lagerelement 16 und damit die Motorwelle 10 in einer Richtung entlang der Längsachse der Motorwelle 10 zu bewegen und damit die mit der Motorwelle 10 über einen Mahlscheibenträger verbundene zweite Mahlscheibe 6 auf die erste Mahlscheibe zuzubewegen und wegzubewegen (d.h. den Mahlgrad des Kaffees zu verändern). In dieser Ausgestaltungsform ist am Boden des Gehäuse-Unterteils 3 ein Sensorelement 25 zur Erfassung des Mahlgrads angeordnet. Dieses Sensorelement ist dazu geeignet, eine Entfernung des Sensorelements 25 zum Lagerelement 16 zu detektieren. Aus dieser Entfernungsinformation kann ein Mahlgrad der Kaffeemühle (bzw. des Kaffees) abgeleitet werden.

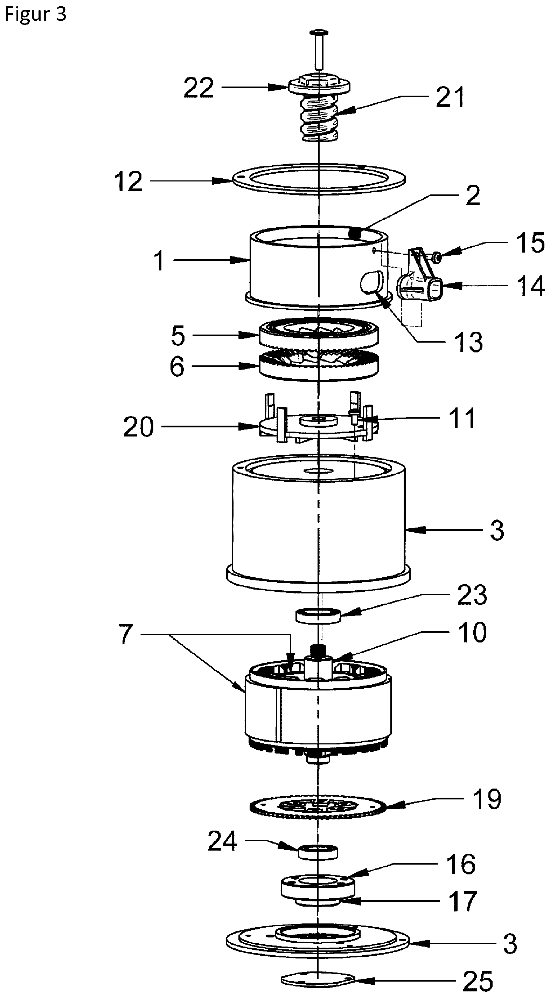

Figur 3 zeigt schematisch einzelne Teile einer spezifischen Ausgestaltungsform einer erfindungsgemäßen Kaffeemühle und deren Assemblierung zur kompletten Kaffeemühle.

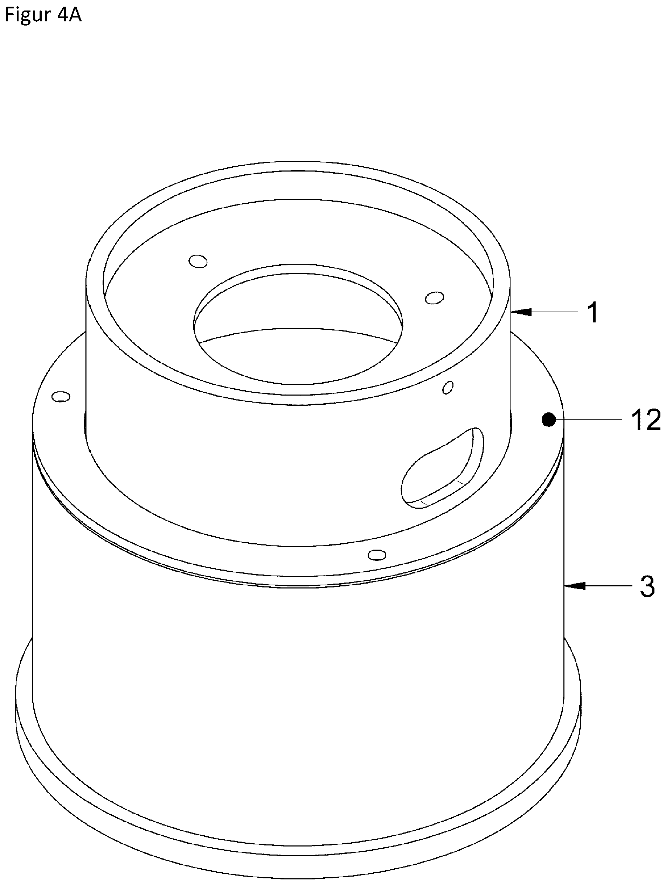

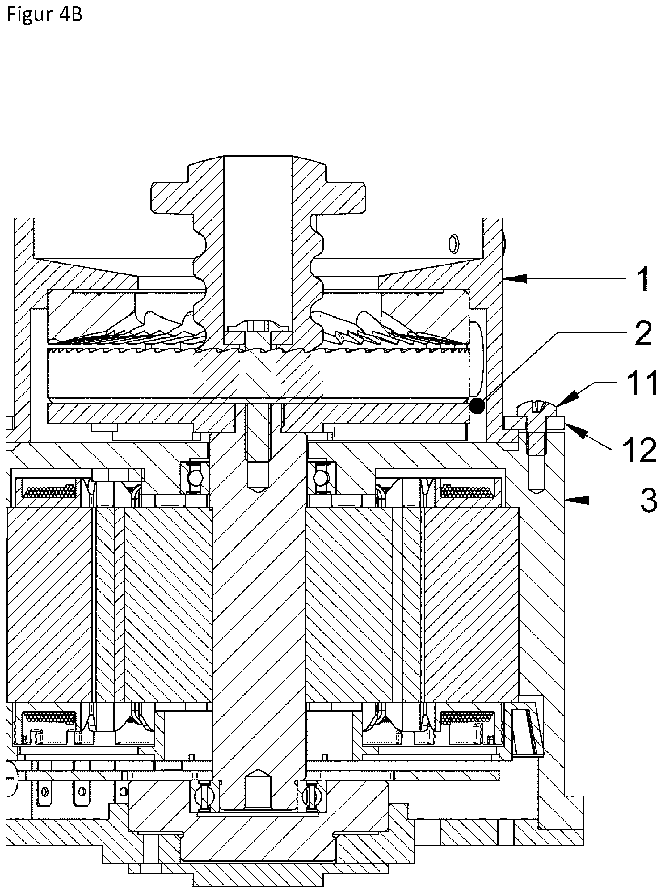

Figuren 4A und 4B zeigt für eine spezifische Ausgestaltung einer erfindungsgemäßen Kaffeemühle eine Verbindung des Gehäuse-Oberteils 1 zu dem Gehäuse-Unterteil 3 über einen Klemmring 12. In Figur 4B ist dargestellt, dass der Klemmring 12 über eine Schraubverbindung 11 das Gehäuse-Oberteil 1 am Gehäuse-Unterteil 3 befestigt. Der Vorteil des Klemmrings 12 ist, dass sich das Gehäuse-Oberteil 1 um 360° relativ zum Gehäuse-Unterteil drehen lässt und sich damit ein am Gehäuse-Oberteil befindlicher Auslass für gemahlenen Kaffee je nach Bedarf einfach und flexibel verschieben lässt.

### Bezugszeichenliste

- 1:: Gehäuse-Oberteil;
- 2:: Innenraum von Gehäuse-Oberteil;
- 3:: Gehäuse-Unterteil (bzw. ein Teil davon);
- 4:: Innenraum von Gehäuse-Unterteil;
- 5:: erste, obere, nicht-rotierbare Mahlscheibe;
- 6:: zweite, untere, rotierbare Mahlscheibe;
- 7:: bürstenloser Gleichstrommotor;
- 8:: Stator des bürstenlosen Gleichstrommotors;
- 9:: Rotor des bürstenlosen Gleichstrommotors;
- 10:: Motorwelle des bürstenlosen Gleichstrommotors;
- 11:: Schraubverbindung;
- 12:: Klemmring;
- 13:: durchgehende Öffnung;
- 14:: Leitungsrohr;
- 15:: Schraubverbindung;
- 16:: Lagerelement zur Lagerung der Motorwelle;
- 17:: Außengewinde des Lagerelements zur Lagerung der Motorwelle;
- 18:: Verstellmotor (z.B. der Kaffeemühle selbst);
- 19:: Zahnrad;
- 20:: Mahlscheibenträger (zum Tragen der zweiten, unteren, rotierbaren Mahlscheibe);
- 21:: Einzugselement;
- 22:: Eingreifschutz am Einzugselement
- 23:: oberes Motorenlager;
- 24:: unteres Motorenlager;
- 25:: Sensorelement zur Erfassung des Mahlgrads.

## Patentansprüche

1. Kaffeemühle mit einem zweiteiligen Gehäuse, enthaltend
a) ein Gehäuse-Oberteil (1) mit einem Innenraum (2), der zur Aufnahme von Kaffeebohnen geeignet ist;
b) ein Gehäuse-Unterteil (3), das mit dem Gehäuse-Oberteil (1) verbunden ist und einen Innenraum (4) aufweist, der zur Aufnahme eines Gleichstrommotors (7) geeignet ist;
c) eine Mahlscheibenanordnung, die eine erste, obere, nicht-rotierbare Mahlscheibe (5) und eine zweite, untere, rotierbare Mahlscheibe (6) enthält oder daraus besteht, wobei die erste Mahlscheibe (5) gegenüber der zweiten Mahlscheibe (6) angeordnet ist und die Kaffeemühle dazu geeignet ist, eine Entfernung der ersten Mahlscheibe (5) zur zweiten Mahlscheibe (6) zu verändern; und
d) einen Gleichstrommotor (7), der einen Stator (8), einen Rotor (9) und eine Motorwelle (10) aufweist, wobei die Motorwelle (10) mit dem Rotor (9) und mit der zweiten Mahlscheibe (6) verbunden ist, wobei der Stator (8) und Rotor (9) innerhalb des Innenraums (4) des Gehäuse-Unterteils (3) angeordnet sind und die Motorwelle (10) innerhalb des Gehäuse-Unterteils (3) und zumindest bereichsweise innerhalb des Gehäuse-Oberteils (1) angeordnet ist;
wobei die Kaffeemühle dazu geeignet ist, die zweite Mahlscheibe (6) durch eine Bewegung des Rotors (9) des Gleichstrommotors (7) relativ zur ersten Mahlscheibe (5) zu rotieren,
**dadurch gekennzeichnet, dass** der Gleichstrommotor (7) ein gehäuseloser Gleichstrommotor (7) ist.

2. Kaffeemühle gemäß dem vorhergehenden Anspruch, **dadurch gekennzeichnet, dass** das Gehäuse-Oberteil (1) durch eine reversible Verbindung mit dem Gehäuse-Unterteil (3) verbunden ist, wobei die reversible Verbindung bevorzugt ausgewählt ist aus der Gruppe bestehend aus Kraftschluss-Verbindung, Formschluss-Verbindung und Kombinationen hiervon, wobei die reversible Verbindung besonders bevorzugt ausgewählt ist aus der Gruppe bestehend aus Klemmverbindung, Schraubverbindung (11), Klammerverbindung, Schnapphakenverbindung, Verbindung über eine geriffelte Fläche und Kombinationen hiervon, wobei die reversible Verbindung insbesondere eine Schraub-Klemm-Verbindung über einen Klemmring (12) ist.

3. Kaffeemühle gemäß einem der vorhergehenden Ansprüche, **dadurch gekennzeichnet, dass** die Kaffeemühle eine durchgehende Öffnung (13) von einem Innenraum der Kaffeemühle in einen Außenraum der Kaffeemühle aufweist und dazu geeignet ist, gemahlenen Kaffee durch die durchgehende Öffnung (13) zu befördern, wobei die durchgehende Öffnung (13) bevorzugt
i) in dem Gehäuse-Oberteil (1) angeordnet ist; und/oder
ii) mit einem Leitungsrohr (14) verbunden ist, wobei das Leitungsrohr (14) optional mit dem Gehäuse-Oberteil (1) über eine Verbindung verbunden ist, die ausgewählt ist aus der Gruppe bestehend aus Steckverbindung, Schraubverbindung (15) und Kombinationen hiervon; angeschraubt ist.

4. Kaffeemühle gemäß einem der vorhergehenden Ansprüche, **dadurch gekennzeichnet, dass** die Kaffeemühle im Gehäuse-Unterteil (3) ein Lagerelement (16) zur Lagerung der Motorwelle (10) aufweist, wobei das Lagerelement (16) bevorzugt
i) ein Außengewinde (17) aufweist, über das es mit dem Gehäuse-Unterteil (3) verschraubt ist, wobei das Außengewinde (17) besonders bevorzugt eine Ganghöhe im Bereich von 0,2 mm bis 1,0 mm, besonders bevorzugt 0,3 mm bis 0,8 mm, ganz besonders bevorzugt 0,4 mm bis 0,6 mm, insbesondere 0,5 mm, aufweist; und/oder
ii) mit einem Verstellmotor (18) verbunden ist, bevorzugt über ein Zahnrad (19), das in ein Ritzel des Verstellmotors (18) eingreift, wobei der Verstellmotor (18) insbesondere dazu geeignet ist, eine Position des Lagerelements (16) und der darin gelagerten Motorwelle (10) in Richtung der Längsachse der Motorwelle (10) zu verändern, wobei der Verstellmotor (18) optional von der Kaffeemühle umfasst ist oder von einer Kaffeemaschine umfasst ist, welche die Kaffeemühle aufweist.

5. Kaffeemühle gemäß einem der vorhergehenden Ansprüche, **dadurch gekennzeichnet, dass** die Motorwelle (10) des Gleichstrommotors (7) dazu geeignet ist, eine Position in Richtung der Längsachse der Motorwelle (10) zu verändern, wobei die Motorwelle (10) bevorzugt
i) mit einem Lagerelement (16) zur Lagerung der Motorwelle (10) verbunden ist, bevorzugt in einem Bereich der Motorwelle (10), der im Gehäuse-Unterteil (3) angeordnet ist, wobei ein Verstellmotor (18) der Kaffeemühle oder ein Verstellmotor (18) einer Kaffeemaschine, welche die Kaffeemühle aufweist, dazu geeignet ist, über eine Rotation seines Rotors (9) eine Veränderung der Position des Lagerelements (16) und der darin gelagerten Motorwelle (10) in Richtung der Längsachse der Motorwelle (10) zu bewirken; und/oder
ii) mit dem Rotor (9) des Gleichstrommotors (7) in einem Bereich der Motorwelle (10) verbunden ist, der im Gehäuse-Unterteil (3) angeordnet ist, wobei der Gleichstrommotor (7) dazu geeignet ist, über eine Rotation seines Rotors (9) eine Drehbewegung der Motorwelle (10) um die Längsachse der Motorwelle (10) zu bewirken; und/oder
iii) über einen Mahlscheibenträger (20) mit der zweiten, unteren, rotierbaren Mahlscheibe verbunden ist, besonders bevorzugt in einem Bereich der Motorwelle (10), der innerhalb des Gehäuse-Oberteils (1) angeordnet ist.

6. Kaffeemühle gemäß einem der vorhergehenden Ansprüche, **dadurch gekennzeichnet, dass** die erste Mahlscheibe (5) und/oder die zweite Mahlscheibe (6)
i) ein Material enthält oder daraus besteht, das ausgewählt ist aus der Gruppe bestehend aus Metall, Keramik und Kombinationen hiervon, bevorzugt ein Material ausgewählt aus der Gruppe bestehend aus Stahl, Keramik und Kombinationen hiervon, insbesondere ein Material ausgewählt aus der Gruppe bestehend aus X210CrW12-Stahl und Al₂O₃-Keramik; und/oder
ii) einen Außendurchmesser im Bereich von 30 bis 80 cm, bevorzugt 55 bis 70 cm, insbesondere 65 cm, aufweist; und/oder
iii) im Gehäuse-Oberteil (1) angeordnet ist.

7. Kaffeemühle gemäß einem der vorhergehenden Ansprüche, **dadurch gekennzeichnet, dass** die zweite Mahlscheibe (6)
i) einstückig mit einem Mahlscheibenträger (20) ist; oder
ii) mit einem Mahlscheibenträger (20) verbunden ist, bevorzugt über eine Verbindung ausgewählt aus der Gruppe bestehend aus Kraftschluss-Verbindung, Formschluss-Verbindung und Kombinationen hiervon, wobei die Verbindung insbesondere eine Schraubverbindung ist.

8. Kaffeemühle gemäß einem der vorhergehenden Ansprüche, **dadurch gekennzeichnet, dass** der Gleichstrommotor (7)
i) ein gehäuseloser, bürstenbehafteter Gleichstrommotor (7) oder ein gehäuseloser, bürstenloser Gleichstrommotor (7) ist; und/oder
ii) eine Leistungsaufnahme im Bereich von 50 bis 500 Watt aufweist; und/oder
iii) eine Höhe im Bereich von 25 bis 70 mm, besonders bevorzugt 35 bis 45 mm, insbesondere 40 mm, aufweist; und/oder
iv) einen Durchmesser im Bereich von 50 bis 120 mm aufweist.

9. Kaffeemühle gemäß einem der vorhergehenden Ansprüche, **dadurch gekennzeichnet, dass** die Kaffeemühle, bevorzugt der Gleichstrommotor (7) der Kaffeemühle, eine Steuereinheit aufweist, die bevorzugt konfiguriert ist,
i) eine Drehzahl des Gleichstrommotors (7) zu steuern oder zu regeln; und/oder
ii) eine Drehrichtung des Rotors (9) des Gleichstrommotors (7) zu steuern oder zu regeln.

10. Kaffeemühle gemäß dem vorhergehenden Anspruch, **dadurch gekennzeichnet, dass** der Gleichstrommotor (7) einen Drehwinkelsensor aufweist, wobei der Drehwinkelsensor bevorzugt ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor und/oder GMR-Sensor enthält oder daraus besteht, und wobei eine Steuereinheit der Kaffeemühle, bevorzugt eine Steuereinheit des Gleichstrommotors (7) der Kaffeemühle, bevorzugt konfiguriert ist, basierend auf mindestens einem Signal des Drehwinkelsensors
i) eine Drehzahl des Gleichstrommotors (7) zu regeln; und/oder
ii) eine Drehrichtung des Rotors (9) des Gleichstrommotors (7) zu steuern oder zu regeln; und/oder
iii) eine Blockade des Gleichstrommotors (7) zu detektieren und im Falle einer detektierten Blockade eine Drehrichtung des Gleichstrommotors (7) für einen bestimmten Zeitraum, insbesondere 1 bis 5 Sekunden, und/oder für einen bestimmten Grad an Umdrehungen, insbesondere 0,25 bis 10 Umdrehungen, umzukehren; und/oder
iv) einen Schleifpunkt der ersten Mahlscheibe (5) auf der zweiten Mahlscheibe (6) zu detektieren und im Falle eines detektierten Schleifpunkts diesen als eine Einstellung für den feinsten Mahlgrad der Kaffeemühle festzulegen, wobei zur Detektion des Schleifpunkts neben dem mindestens einen Signal des Drehwinkelsensors bevorzugt auch eine Stromaufnahme des Gleichstrommotors (7) berücksichtigt wird, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird.

11. Kaffeemühle gemäß dem vorhergehenden Anspruch, **dadurch gekennzeichnet, dass** das Gehäuse-Oberteil (1) und/oder das Gehäuse-Unterteil (3)
i) zumindest bereichsweise eine Wandstärke im Bereich von 1 bis 5 mm aufweist; und/oder
ii) ein Material enthält oder daraus besteht, das ausgewählt ist aus der Gruppe bestehend aus Metall, Kunststoff und Kombinationen hiervon, bevorzugt ein Material ausgewählt aus der Gruppe bestehend aus Aludruckguss, Zinkdruckguss, Stahl, Kunststoff und Kombinationen hiervon; und/oder
iii) eine Höhe im Bereich von 50 bis 150 mm aufweist; und/oder
iv) einen Durchmesser im Bereich von 50 bis 150 mm aufweist; und/oder
v) zumindest bereichsweise eine Form eines Hohlzylinders aufweist.

12. Kaffeemaschine, enthaltend eine Kaffeemühle gemäß einem der vorhergehenden Ansprüche, wobei die Kaffeemaschine bevorzugt eine halbautomatische Kaffeemaschine oder eine vollautomatische Kaffeemaschine ist.

13. Kaffeemaschine gemäß Anspruch 12, **dadurch gekennzeichnet, dass** der Gleichstrommotor (7) der Kaffeemühle der Kaffeemaschine einen Drehwinkelsensor aufweist, bevorzugt einen Drehwinkelsensor, der ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor und/oder GMR-Sensor enthält oder daraus besteht, und eine Steuereinheit der Kaffeemühle und/oder der Kaffeemaschine konfiguriert ist, basierend auf mindestens einem Signal des Drehwinkelsensors
i) eine Drehzahl des Gleichstrommotors (7) zu regeln; und/oder
ii) eine Drehrichtung des Rotors (9) des Gleichstrommotors (7) zu regeln; und/oder
iii) eine Blockade des Gleichstrommotors (7) zu detektieren und im Falle einer detektierten Blockade eine Drehrichtung des Gleichstrommotors (7) für einen bestimmten Zeitraum, insbesondere 1 bis 5 Sekunden, und/oder für einen bestimmten Grad an Umdrehungen, insbesondere 0,25 bis 10 Umdrehungen, umzukehren; und/oder
iv) einen Schleifpunkt der ersten Mahlscheibe (5) auf der zweiten Mahlscheibe (6) zu detektieren und im Falle eines detektierten Schleifpunkts diesen als eine Einstellung für den feinsten Mahlgrad der Kaffeemühle festzulegen, wobei zur Detektion des Schleifpunkts neben dem mindestens einen Signal des DrehwinkelSensors optional auch eine Stromaufnahme des Gleichstrommotors (7) berücksichtigt wird, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird.

14. Verfahren zum Mahlen von Kaffee in einer Kaffeemühle, umfassend die Schritte
a) Bereitstellen einer Kaffeemühle gemäß einem der Ansprüche 1 bis 11 oder einer Kaffeemaschine gemäß einem der Ansprüche 12 oder 13;
b) Befüllen des Gehäuse-Oberteils (1) der Kaffeemühle mit Kaffeebohnen oder grobgemahlenen Kaffee; und
c) Mahlen der Kaffeebohnen oder des grobgemahlenen Kaffees.

15. Verfahren gemäß Anspruch 14, **dadurch gekennzeichnet, dass** der Gleichstrommotor (7) einen Drehwinkelsensor aufweist, bevorzugt einen Drehwinkelsensor, der ausgewählt ist aus der Gruppe bestehend aus optischer Drehwinkelsensor, magnetischer Drehwinkelsensor und Kombinationen hiervon, wobei der Drehwinkelsensor besonders bevorzugt einen Hall-Sensor oder GMR-Sensorenthält oder daraus besteht, und basierend auf mindestens einem Signal des Drehwinkelsensors
i) eine Drehzahl des Gleichstrommotors (7) geregelt wird; und/oder
ii) eine Drehrichtung des Rotors (9) des Gleichstrommotors (7) geregelt wird; und/oder
iii) eine Blockade des Gleichstrommotors (7) detektiert wird und im Falle einer detektierten Blockade eine Drehrichtung des Gleichstrommotors (7) für einen bestimmten Zeitraum, insbesondere 1 bis 5 Sekunden, und/oder für einen bestimmten Grad an Umdrehungen, insbesondere 0,25 bis 10 Umdrehungen, umgekehrt wird; und/oder
iv) ein Schleifpunkt der ersten Mahlscheibe (5) auf der zweiten Mahlscheibe (6) detektiert wird und im Falle eines detektierten Schleifpunkts dieser als eine Einstellung für den feinsten Mahlgrad der Kaffeemühle festgelegt wird, wobei zur Detektion des Schleifpunkts neben dem mindestens einen Signal des DrehwinkelSensors optional auch eine Stromaufnahme des Gleichstrommotors (7) berücksichtigt wird, wobei ein Schleifpunkt optional entweder durch einen Abfall der Drehzahl bei konstanter Stromaufnahme detektiert wird oder durch einen Anstieg der Stromaufnahme bei einer konstanten Drehzahl detektiert wird;
wobei die genannten Verfahrensschritte optional von einer Steuereinheit des Gleichstrommotors (7), von einer Steuereinheit der Kaffeemühle oder von einer Steuereinheit der Kaffeemaschine durchgeführt werden.

## Claims

1. A coffee grinder with a two-part housing, comprising
a) a housing upper part (1) with an interior space (2) which is suitable for accommodating coffee beans;
b) a housing lower part (3), which is connected to the housing upper part (1) and has an interior space (4) suitable for accommodating a DC motor (7);
c) a grinding disc assembly, which comprises a first, upper, non-rotatable grinding disc (5) and a second, lower, rotatable grinding disc (6), the first grinding disc (5) being positioned opposite the second grinding disc (6), and the coffee grinder being suitable for changing a distance between the first grinding disc (5) and the second grinding disc (6); and
d) a DC motor (7), which comprises a stator (8), a rotor (9) and a motor shaft (10), the motor shaft (10) being connected to the rotor (9) and to the second grinding disc (6), the stator (8) and rotor (9) being positioned within the interior space (4) of the housing lower part (3), and the motor shaft (10) being positioned within the housing lower part (3) and at least partially within the housing upper part (1);
the coffee grinder being suitable to rotate the second grinding disc (6) relative to the first grinding disc (5) by a movement of the rotor (9) of the DC motor (7),
**characterised in that** the DC motor (7) is a frameless DC motor (7).

2. The coffee grinder according to the preceding claim, **characterised in that** the housing upper part (1) is connected by a reversible connection to the housing lower part (3), the reversible connection preferably being selected from the group consisting of a frictional connection, form-fit connection and combinations thereof, the reversible connection being particularly preferably selected from the group consisting of a clamping connection, a screwed joint (11), a clamp connection, a snap hook connection, a connection via a ribbed surface and combinations thereof, the reversible connection particularly being a threaded-clamp connection via a clamping ring (12).

3. The coffee grinder according to any one of the preceding claims, **characterised in that** the coffee grinder has a through hole (13) from an interior space of the coffee grinder to an exterior space of the coffee grinder and is suitable for conveying ground coffee through the through hole (13), the through hole (13) being preferably
i) positioned in the housing upper part (1); and/or
ii) connected to a conduit (14), the conduit (14) being optionally connected to the housing upper part (1) via a connection selected from the group consisting of a plug connection, a screwed joint (15) and combinations thereof; screwed on.

4. The coffee grinder according to any one of the preceding claims, **characterised in that** the coffee grinder has a bearing member (16) in the housing lower part (3) to support the motor shaft (10), the bearing member (16) preferably
i) having an external thread (17) by means of which it is screwed to the housing lower part (3), the external thread (17) having a pitch in the range of 0.2 mm to 1.0 mm, particularly preferably 0.3 mm to 0.8 mm, most preferably 0.4 mm to 0.6 mm, particularly 0.5 mm; and/or
ii) being connected to a variable displacement motor (18), preferably via a gear wheel (19) that meshes with a pinion of the variable displacement motor (18), the variable displacement motor (18) being particularly suitable for changing a position of the bearing member (16) and the motor shaft (10) supported therein in the direction of the longitudinal axis of the motor shaft (10), the variable displacement motor (18) being optionally comprised by the coffee grinder or comprised by a coffee machine which comoprises the coffee grinder.

5. The coffee grinder according to any one of the preceding claims, **characterised in that** the motor shaft (10) of the DC motor (7) is suitable for changing a position of the motor shaft (10) in the direction of the longitudinal axis, the motor shaft (10) being preferably
i) connected to a bearing member (16) for supporting the motor shaft (10), preferably in a region of the motor shaft (10) which is positioned in the housing lower part (3), a variable displacement motor (18) of the coffee grinder or a variable displacement motor (18) of a coffee machine which comprises the coffee grinder being suitable for causing a change in the position of the bearing member (16) and the motor shaft (10) supported therein in the direction of the longitudinal axis of the motor shaft (10) via a rotation of its rotor (9); and/or
ii) connected with the rotor (9) of the DC motor (7) in a region of the motor shaft (10) which is positioned in the housing lower part (3), the DC motor (7) being suitable for causing a rotary movement of the motor shaft (10) around the longitudinal axis of the motor shaft (10) via a rotation of its rotor (9); and/or
iii) connected to the second, lower, rotatable grinding disc via a grinding disc carrier (20), particularly preferably in a region of the motor shaft (10) which is positioned inside the housing upper part (1).

6. The coffee grinder according to one of the preceding claims, **characterised in that** the first grinding disc (5) and/or the second grinding disc (6)
i) comprises or consists of a material selected from the group consisting of metal, ceramics and combinations thereof, preferably a material selected from the group consisting of steel, ceramics and combinations thereof, particularly a material selected from the group consisting of X210CrW12 steel and Al₂O₃ ceramics; and/or
ii) has an outer diameter in the range of 30 to 80 cm, preferably 55 to 70 cm, particularly 65 cm; and/or
iii) is positioned in the housing upper part (1).

7. The coffee grinder according to any one of the preceding claims, **characterised in that** the second grinding disc (6)
i) is monolithic with a grinding disc carrier (20); or
ii) is connected to a grinding disc carrier (20), preferably via a connection selected from the group consisting of a frictional connection, a form-fit connection and combinations thereof, the connection being in particular a screw connection.

8. The coffee grinder according to one of the preceding claims, **characterised in that** the DC motor (7)
i) is a frameless, brushed DC motor (7) or a frameless, brushless DC motor (7); and/or
ii) has a power consumption in the range of 50 to 500 watts; and/or
iii) has a height in the range of 25 to 70 mm, particularly preferably 35 to 45 mm, particularly preferably 40 mm; and/or
iv) has a diameter in the range of 50 to 120 mm.

9. The coffee grinder according to any one of the preceding claims, **characterised in that** the coffee grinder, preferably the DC motor (7) of the coffee grinder, has a controller which is preferably configured
i) to control or regulate a rotational speed of the DC motor (7); and/or
ii) to control or regulate a rotational direction of the rotor (9) of the DC motor (7).

10. The coffee grinder according to the preceding claim, **characterised in that** the DC motor (7) has a rotation angle sensor, the rotation angle sensor being preferably selected from the group consisting of an optical rotation angle sensor, a magnetic rotation angle sensor and combinations thereof, the rotation angle sensor particularly preferably comprising or consisting of a Hall sensor and/or a GMR sensor, and a control unit of the coffee grinder, preferably a control unit of the DC motor (7) of the coffee grinder, being preferably configured, based on at least one signal from the rotation angle sensor,
i) to regulate a rotational speed of the DC motor (7); and/or
ii) to control or regulate a rotational direction of the rotor (9) of the DC motor (7); and/or
iii) to detect a blockage of the DC motor (7) and, in the event a blockage is detected, to reverse the rotational direction of the DC motor (7) for a specific period of time, particularly 1 to 5 seconds, and/or for a specific number of revolutions, in particular 0.25 to 10 revolutions; and/or
iv) to detect a grinding point of the first grinding disc (5) on the second grinding disc (6) and, in the event of a detected grinding point, to set this as an adjustment for the finest grind of the coffee grinder, wherein, to detect the grinding point, the current consumption of the DC motor (7) being preferably also taken into account in addition to the at least one signal from the rotation angle sensor, a grinding point being optionally detected either by a drop in the rotational speed at a constant current consumption or by an increase in current consumption at a constant rotational speed.

11. The coffee grinder according to the preceding claim, **characterised in that** the housing upper part (1) and/or the housing lower part (3)
i) at least has a wall thickness in the range of 1 mm to 5 mm; and/ or
ii) comprises or consists of a material selected from the group consisting of metal, plastic and combinations thereof, preferably a material selected from the group consisting of die-cast aluminium, die-cast zinc, steel, plastic and combinations thereof; and/or
iii) has a height in the range of 50 to 150 mm; and/or
iv) has a diameter in the range of 50 to 150 mm; and/or
v) is at least in part shaped as a hollow cylinder.

12. A coffee machine, comprising a coffee grinder according to any one of the preceding claims, the coffee machine being preferably a semi-automatic coffee machine or a fully automatic coffee machine.

13. The coffee grinder according to claim 12, **characterised in that** the DC motor (7) of the coffee grinder of the coffee machine has a rotation angle sensor, preferably a rotation angle sensor selected from the group consisting of an optical rotation angle sensor, a magnetic rotation angle sensor and combinations thereof, the rotation angle sensor particularly preferably comprising or consisting of a Hall sensor and/or a GMR sensor, and a controller of the coffee grinder and/or the coffee machine being configured, based on at least one signal from the rotation angle sensor,
i) to regulate a rotational speed of the DC motor (7); and/or
ii) to regulate a rotational direction of the rotor (9) of the DC motor (7); and/or
iii) to detect a blockage of the DC motor (7) and, in the event a blockage is detected, to reverse the rotational direction of the DC motor (7) for a specific period of time, particularly 1 to 5 seconds, and/or for a specific number of revolutions, in particular 0.25 to 10 revolutions; and/or
iv) to detect a grinding point of the first grinding disc (5) on the second grinding disc (6) and, in the event of detecting grinding point, setting this as an adjustment for the finest grind of the coffee grinder, wherein, to detect the grinding point, the current consumption of the DC motor (7) being optionally also taken into account in addition to the at least one signal from the rotation angle sensor, a grinding point being optionally detected either by a drop in rotational speed at constant current consumption or by an increase in current consumption at constant rotational speed.

14. A method for grinding coffee in a coffee grinder, comprising the steps of
a) providing a coffee grinder according to any one of claims 1 to 11 or a coffee machine according to any one of claims 12 or 13;
b) filling the housing upper part (1) of the coffee grinder with coffee beans or coarsely ground coffee; and
c) grinding the coffee beans or the coarsely ground coffee.

15. The method according to claim 14, **characterised in that** the DC motor (7) has a rotation angle sensor, preferably a rotation angle sensor selected from the group consisting of an optical rotation angle sensor, a magnetic rotation angle sensor and combinations thereof, the rotation angle sensor particularly preferably comprising or consisting of a Hall sensor or a GMR sensor, and, based on at least one signal from the rotation angle sensor,
i) a rotational speed of the DC motor (7) is regulated; and/or
ii) a rotational direction of the rotor (9) of the DC motor (7) is regulated; and/or
iii) a blockage of the DC motor (7) is detected and, in the event a blockage is detected, the rotational direction of the DC motor (7) is reversed for a specific period of time, particularly 1 to 5 seconds, and/or for a specific number of revolutions, in particular 0.25 to 10 revolutions; and/or
iv) a grinding point of the first grinding disc (5) on the second grinding disc (6) is detected, and, in the event a grinding point is detected, this is set as the setting for the finest grind of the coffee grinder, the current consumption of the DC motor (7), in addition to the at least one signal from the rotation angle sensor, is also optionally taken into account in detecting the grinding point, a grinding point is optionally detected either by a drop in rotational speed at constant current consumption or by an increase in current consumption at constant rotational speed;
the aforementioned method steps are optionally performed by a controller of the DC motor (7), by a controller of the coffee grinder, or by a controller of the coffee machine.

## Revendications

1. Moulin à café, comprenant un boîtier en deux parties, contenant
a) une partie supérieure de boîtier (1) comprenant un espace intérieur (2) adapté pour accueillir les grains de café ;
b) une partie inférieure de boîtier (3) reliée à la partie supérieure de boîtier (1) et présentant un espace intérieur (4) adapté pour accueillir un moteur à courant continu (7) ;
c) un ensemble de disques de mouture qui contient ou est constitué d'un premier disque de mouture supérieur non rotatif (5) et d'un deuxième disque de mouture inférieur rotatif (6), dans lequel le premier disque de mouture (5) est agencé en face du deuxième disque de mouture (6) et le moulin à café est adapté pour modifier l'éloignement du premier disque de mouture (5) par rapport au deuxième disque de mouture (6) ; et
d) un moteur à courant continu (7) comprenant un stator (8), un rotor (9) et un arbre de moteur (10), dans lequel l'arbre de moteur (10) est relié au rotor (9) et au deuxième disque de mouture (6), dans lequel le stator (8) et le rotor (9) sont agencés à l'intérieur de l'espace intérieur (4) de la partie inférieure de boîtier (3) et l'arbre de moteur (10) est agencé à l'intérieur de la partie inférieure de boîtier (3) et au moins par endroits à l'intérieur de la partie supérieure de boîtier (1) ;
dans lequel le moulin à café est adapté pour faire tourner le deuxième disque de mouture (6) par rapport au premier disque de mouture (5) grâce à un mouvement du rotor (9) du moteur à courant continu (7),
**caractérisé en ce que** le moteur à courant continu (7) est un moteur à courant continu sans boîtier (7).

2. Moulin à café selon la revendication précédente, **caractérisé en ce que** la partie supérieure de boîtier (1) est reliée à la partie inférieure de boîtier (3) grâce à une liaison réversible, dans lequel la liaison réversible est de manière préférée choisie dans le groupe constitué d'une liaison par complémentarité de force, d'une liaison par complémentarité de forme et de combinaisons de celles-ci, dans lequel la liaison réversible est de manière particulièrement préférée choisie dans le groupe constitué d'une liaison par serrage, d'une liaison par vissage (11), d'une liaison par agrafage, d'une liaison par mousqueton, d'une liaison par l'intermédiaire d'une surface cannelée et de combinaisons de celles-ci, dans lequel la liaison réversible est en particulier une liaison par vissage et serrage par l'intermédiaire d'une bague de serrage (12).

3. Moulin à café selon l'une quelconque des revendications précédentes, **caractérisé en ce que** le moulin à café présente une ouverture traversante (13) allant d'un espace intérieur du moulin à café à un espace extérieur du moulin à café et est adapté pour transporter le café moulu à travers l'ouverture traversante (13), dans lequel l'ouverture traversante (13) est agencée de manière préférée
i) dans la partie supérieure du boîtier (1) ; et/ou
ii) est raccordée à un tuyau formant conduite (14), dans lequel le tuyau formant conduite (14) est éventuellement raccordé à la partie supérieure de boîtier (1) par l'intermédiaire d'une liaison choisie dans le groupe constitué d'un raccord enfichable, d'un raccord à vis (15) et de combinaisons de ceux-ci ; ou est vissé.

4. Moulin à café selon l'une quelconque des revendications précédentes, **caractérisé en ce que** le moulin à café présente dans la partie inférieure de boîtier (3) un élément formant palier (16) permettant de mettre sur palier l'arbre de moteur (10), dans lequel l'élément formant palier (16) présente de manière préférée
i) un filetage extérieur (17) grâce auquel il est vissé à la partie inférieure du boîtier (3), dans lequel le filetage extérieur (17) présente de manière particulièrement préférée un pas dans la plage comprise entre 0,2 mm et 1,0 mm, de manière particulièrement préférée comprise entre 0,3 mm et 0,8 mm, de manière particulièrement préférée comprise entre 0,4 mm et 0,6 mm, en particulier de 0,5 mm ; et/ou
ii) est relié à un moteur de réglage (18), de manière préférée par l'intermédiaire d'une roue dentée (19) qui vient en prise dans un pignon du moteur de réglage (18), dans lequel le moteur de réglage (18) est en particulier adapté pour modifier une position de l'élément formant palier (16) et de l'arbre de moteur (10) mis sur palier dans celui-ci dans la direction de l'axe longitudinal de l'arbre de moteur (10), dans lequel le moteur de réglage (18) est éventuellement entouré par le moulin à café ou est entouré par une machine à café qui présente le moulin à café.

5. Moulin à café selon l'une quelconque des revendications précédentes, **caractérisé en ce que** l'arbre de moteur (10) du moteur à courant continu (7) est adapté pour modifier une position en direction de l'axe longitudinal de l'arbre de moteur (10), dans lequel l'arbre de moteur (10) est de manière préférée
i) relié à un élément formant palier (16) permettant de mettre sur palier l'arbre de moteur (10), de manière préférée dans une région de l'arbre de moteur (10) qui est agencée dans la partie inférieure du boîtier (3), dans lequel un moteur de réglage (18) du moulin à café ou un moteur de réglage (18) d'une machine à café présentant le moulin à café est adapté pour provoquer, par l'intermédiaire d'une rotation de son rotor (9) et en direction de l'axe longitudinal de l'arbre de moteur (10), une modification de la position de l'élément formant palier (16) et de l'arbre de moteur (10) qui est mis sur palier dans celui-ci ; et/ou
ii) relié au rotor (9) du moteur à courant continu (7) dans une région de l'arbre de moteur (10) qui est agencée dans la partie inférieure du carter (3), dans lequel le moteur à courant continu (7) est adapté pour provoquer, par l'intermédiaire d'une rotation de son rotor (9), un mouvement de rotation de l'arbre de moteur (10) autour de l'axe longitudinal de l'arbre de moteur (10) ; et/ou
iii) relié au deuxième disque de mouture inférieur rotatif par l'intermédiaire d'un support de disque de mouture (20), de manière préférée dans une région de l'arbre de moteur (10) qui est agencée à l'intérieur de la partie supérieure de boîtier (1).

6. Moulin à café selon l'une quelconque des revendications précédentes, **caractérisé en ce que** le premier disque de mouture (5) et/ou le deuxième disque de mouture (6)
i) contien(nen)t ou est/sont constitué(s) d'un matériau choisi dans le groupe constitué de métal, de céramique et de combinaisons de ceux-ci, de manière préférée un matériau choisi dans le groupe constitué d'acier, de céramique et de combinaisons de ceux-ci, en particulier un matériau choisi dans le groupe constitué d'acier X210CrW12 et de céramique Al₂O₃ ; et/ou
ii) présente(n)t un diamètre extérieur dans la plage comprise entre 30 et 80 cm, de manière préférée entre 55 et 70 cm, en particulier de 65 cm ; et/ou
iii) est/sont agencé(s) dans la partie supérieure du boîtier (1).

7. Moulin à café selon l'une quelconque des revendications précédentes, **caractérisé en ce que** le deuxième disque de mouture (6)
i) est d'un seul tenant avec un support de disque de mouture (20) ; ou
ii) est relié à un support de disque de mouture (20), de manière préférée par une liaison choisie dans le groupe constitué d'une liaison par complémentarité de force, d'une liaison par complémentarité de forme et de combinaisons de celles-ci, dans lequel la liaison est notamment une liaison par vissage.

8. Moulin à café selon l'une quelconque des revendications précédentes, **caractérisé en ce que** le moteur à courant continu (7)
i) est un moteur à courant continu (7) sans boîtier et à balais ou un moteur à courant continu (7) sans boîtier et sans balais ; et/ou
ii) présente une consommation électrique dans la plage comprise entre 50 et 500 watts ; et/ou
iii) présente une hauteur dans la plage comprise entre 25 et 70 mm, de manière préférée entre 35 et 45 mm, en particulier de 40 mm ; et/ou
iv) présente un diamètre dans la plage comprise entre 50 et 120 mm.

9. Moulin à café selon l'une quelconque des revendications précédentes, **caractérisé en ce que** le moulin à café, de manière préférée le moteur à courant continu (7) du moulin à café, présente une unité de commande qui est de manière préférée configurée pour
i) commander ou réguler une vitesse de rotation du moteur à courant continu (7) ; et/ou pour
ii) commander ou réguler un sens de rotation du rotor (9) du moteur à courant continu (7).

10. Moulin à café selon la revendication précédente, **caractérisé en ce que** le moteur à courant continu (7) présente un capteur d'angle de rotation, dans lequel le capteur d'angle de rotation est de manière préférée choisi dans le groupe constitué d'un capteur d'angle de rotation optique, d'un capteur d'angle de rotation magnétique et de combinaisons de ceux-ci, dans lequel le capteur d'angle de rotation contient de manière particulièrement préférée un capteur à effet Hall et/ou un capteur GMR ou est constitué de ceux-ci, et dans lequel une unité de commande du moulin à café, de manière préférée une unité de commande du moteur à courant continu (7) du moulin à café, est de manière préférée configurée pour, en se basant sur au moins un signal du capteur d'angle de rotation
i) réguler une vitesse de rotation du moteur à courant continu (7) ; et/ou
ii) commander ou réguler un sens de rotation du rotor (9) du moteur à courant continu (7) ; et/ou
iii) détecter un blocage du moteur à courant continu (7) et, en cas de détection d'un blocage, inverser le sens de rotation du moteur à courant continu (7) pendant une période déterminée, en particulier comprise entre 1 et 5 secondes, et/ou pour un certain degré de rotation, en particulier compris entre 0,25 et 10 tours ; et/ou
iv) détecter un point de friction du premier disque de mouture (5) sur le deuxième disque de mouture (6) et, en cas de détection d'un point de friction, le définir comme un réglage pour le degré de mouture le plus fin du moulin à café, dans lequel, en vue de la détection du point de friction, une consommation de courant du moteur à courant continu (7) est de manière préférée prise en compte en plus du au moins un signal du capteur d'angle de rotation, dans lequel un point de friction est éventuellement détecté soit par une baisse de la vitesse de rotation à consommation de courant constante, soit par une augmentation de la consommation de courant à vitesse de rotation constante.

11. Moulin à café selon la revendication précédente, **caractérisé en ce que** la partie supérieure de boîtier (1) et/ou la partie inférieure de boîtier (3)
i) présente au moins par endroits une épaisseur de paroi dans la plage comprise entre 1 et 5 mm ; et/ou
ii) contient ou est constitué d'un matériau choisi dans le groupe constitué de métal, de plastique et de combinaisons de ceux-ci, de manière préférée un matériau choisi dans le groupe constitué d'aluminium moulé sous pression, de zinc moulé sous pression, d'acier, de plastique et de combinaisons de ceux-ci ; et/ou
iii) présente une hauteur dans la plage comprise entre 50 et 150 mm ; et/ou
iv) présente un diamètre dans la plage comprise entre 50 et 150 mm ; et/ou
v) présente au moins par endroits une forme de cylindre creux.

12. Machine à café, contenant un moulin à café selon l'une quelconque des revendications précédentes, dans laquelle la machine à café est de manière préférée une machine à café semi-automatique ou une machine à café entièrement automatique.

13. Machine à café selon la revendication 12, **caractérisée en ce que** le moteur à courant continu (7) du moulin à café de la machine à café présente un capteur d'angle de rotation, de manière préférée un capteur d'angle de rotation qui est choisi dans le groupe constitué d'un capteur d'angle de rotation optique, d'un capteur d'angle de rotation magnétique et de combinaisons de ceux-ci, dans laquelle le capteur d'angle de rotation contient de manière particulièrement préférée un capteur à effet Hall et/ou un capteur GMR ou est constitué de celui-ci, et une unité de commande du moulin à café et/ou de la machine à café est configurée pour, en se basant sur au moins un signal du capteur d'angle de rotation
i) réguler une vitesse de rotation du moteur à courant continu (7) ; et/ou
ii) réguler un sens de rotation du rotor (9) du moteur à courant continu (7) ; et/ou
iii) détecter un blocage du moteur à courant continu (7) et, en cas de détection d'un blocage, inverser le sens de rotation du moteur à courant continu (7) pendant une période déterminée, en particulier comprise entre 1 et 5 secondes, et/ou pour un certain degré de rotation, en particulier compris entre 0,25 et 10 tours ; et/ou
iv) détecter un point de friction du premier disque de mouture (5) sur le deuxième disque de mouture (6) et, en cas de détection d'un point de friction, le définir comme un réglage pour le degré de mouture le plus fin du moulin à café, dans lequel, en vue de la détection du point de friction, une consommation de courant du moteur à courant continu (7) est de manière préférée prise en compte en plus du au moins un signal du capteur d'angle de rotation, dans lequel un point de friction est éventuellement détecté soit par une baisse de la vitesse de rotation à consommation de courant constante, soit par une augmentation de la consommation de courant à vitesse de rotation constante.

14. Procédé de mouture de café dans un moulin à café, comprenant les étapes consistant à :
a) fournir un moulin à café selon l'une quelconque des revendications 1 à 11 ou une machine à café selon l'une quelconque des revendications 12 ou 13 ;
b) remplir la partie supérieure de boîtier (1) du moulin à café avec des grains de café ou du café grossièrement moulu ; et
c) moudre les grains de café ou le café grossièrement moulu.

15. Procédé selon la revendication 14, **caractérisé en ce que** le moteur à courant continu (7) présente un capteur d'angle de rotation, de manière préférée un capteur d'angle de rotation qui est choisi dans le groupe constitué d'un capteur d'angle de rotation optique, d'un capteur d'angle de rotation magnétique et de combinaisons de ceux-ci, dans lequel le capteur d'angle de rotation contient de manière particulièrement préférée un capteur à effet Hall ou un capteur GMR ou est constitué de ceux-ci, et en se basant sur au moins un signal du capteur d'angle de rotation
i) une vitesse de rotation du moteur à courant continu (7) est régulée ; et/ou
ii) un sens de rotation du rotor (9) du moteur à courant continu (7) est régulé ; et/ou
iii) un blocage du moteur à courant continu (7) est détecté et, en cas de détection d'un blocage, le sens de rotation du moteur à courant continu (7) est inversé pendant une période déterminée, en particulier comprise entre 1 et 5 secondes, et/ou pour un certain degré de rotation, en particulier compris entre 0,25 et 10 tours ; et/ou
iv) un point de friction du premier disque de mouture (5) sur le deuxième disque de mouture (6) est détecté et, en cas de détection d'un point de friction, ledit point de friction est défini comme un réglage pour le degré de mouture le plus fin du moulin à café, dans lequel, en vue de la détection du point de friction, une consommation de courant du moteur à courant continu (7) est éventuellement également prise en compte en plus du au moins un signal du capteur d'angle de rotation, dans lequel un point de friction est éventuellement détecté soit par une baisse de la vitesse de rotation à consommation de courant constante, soit par une augmentation de la consommation de courant à vitesse de rotation constante;
dans lequel les étapes de procédé ci-dessus sont éventuellement mises en œuvre par une unité de commande du moteur à courant continu (7), par une unité de commande du moulin à café ou par une unité de commande de la machine à café.
